# EUROPÄISCHE PATENTSCHRIFT

(11) **EP 2 839 977 B1**
(45) Veröffentlichungstag und Bekanntmachung des Hinweises auf die Patenterteilung: **06.07.2016**
(21) Anmeldenummer: 14162775.2
(22) Anmeldetag: 31.03.2014
(51) Int. Cl.: B60C 27/08, F16G 15/04

(54) **Kettenschloss**
Chain lock
Serrure à chaîne

(30) Priorität: 13.08.2013 DE 202013103661 U
(43) Veröffentlichungstag der Anmeldung: 25.02.2015
(73) Patentinhaber: Erlau AG, 73431 Aalen (DE)
(72) Erfinder: Rösler, Bernd, 73433 Aalen-Wasseralfingen (DE)
(74) Vertreter: Grünecker Patent- und Rechtsanwälte PartG mbB

(56) Entgegenhaltungen:
- AT-A4- 512 055
- FR-A- 1 118 908
- NL-A- 8 502 566
- US-A- 4 306 605
- US-A- 4 555 125

## Beschreibung

Die Erfindung betrifft ein Kettenschloss zur Verbindung zweier Kettenglieder. Mit einem solchen Kettenschloss können beispielsweise zwei Ketten miteinander verbunden werden, indem zwei Kettenendglieder eingehängt werden. Ein Kettenschloss kann auch zur Verkürzung einer Kette benutzt werden, indem zwei Kettenglieder einer Kette, die nicht aneinandergrenzen, miteinander verbunden werden. Wenn die Kettenglieder eingehängt sind, wird das Kettenschloss versperrt, so dass die Kettenglieder nicht mehr aus dem Kettenschloss herausfallen können siehe zum Beispiel US 4306605 und AT 512055.

Eine Montage ist einfach bei einem Kettenschloss mit einem Grundkörper, der zwei Aufnahmen für jeweils eines der beiden Kettenglieder und eine den beiden Aufnahmen gemeinsame Einführöffnung zum Einhängen der Kettenglieder bildet, und mit einem in einer Einsteckstellung durch den Grundkörper durchsteckbaren und in einer Betriebsstellung die Einführöffnung versperrenden Sperrorgan, wobei das Sperrorgan in der Betriebsstellung durch eine Formschlussverbindung im Grundkörper gehalten ist.

Das Kettenschloss kann einfach montiert werden, indem das Sperrorgan durch den Grundkörper durchgesteckt wird. Da das Sperrorgan in der Betriebsstellung durch eine Formschlussverbindung im Grundkörper gehalten ist, ist, anders zum Beispiel bei einer kraftschlüssigen Verbindung, der Durchsteckvorgang mit geringen Kräften durchführbar.

Aufgabe der Erfindung ist es, die Sicherheit eines Kettenschlosses zu erhöhen, wenn das Sperrorgan in der Einsteck- und/oder der Betriebsstellung drehbar und in seiner Längsrichtung durch die Formschlussverbindung unverlierbar im Kettenschloss gehalten ist. Erfindungsgemäß wird dies dadurch gelöst, dass das Sperrorgan in der Betriebsstellung durch eine die Drehstellung blockierende Drehrastung gehalten ist. Dies erhöht die Sicherheit, da sich das Sperrorgan nicht selbsttätig aus der Betriebsstellung heraus bewegen kann.

Die Erfindung kann mit den weiteren, jeweils für sich vorteilhaften und beliebig miteinander kombinierbaren Weiterentwicklungen und Ausgestaltungen weiter verbessert werden.

Um das Durchstecken möglichst einfach zu gestalten, kann das Sperrorgan von einer der Einführöffnung abgewandten Rückseite des Kettenschlosses her zwischen die beiden Aufnahmen ragend durchgesteckt sein.

Das Sperrorgan kann einen Kopf aufweisen. Der Kopf kann dazu dienen, die Bewegung des Sperrorgans in der Durchsteckrichtung zu begrenzen. Ferner kann der Kopf zur Betätigung des Sperrorgans dienen. Das Sperrorgan kann an dem Kopf gelagert oder gehalten sein.

Der Kopf kann eine Werkzeugschnittstelle aufweisen, an der das Sperrorgan bewegt oder betätigt werden kann. Beispielsweise kann eine Aufnahme für einen Sechskantschlüssel vorhanden sein. Auch ein Schlitz zur Betätigung mit einem Schraubenzieher kann als Werkzeugschnittstelle dienen.

Der Kopf kann in dem Grundkörper versenkt sein. Er kann nicht aus dem Grundkörper hinausragen, um ein ungewolltes Betätigen zu verhindern oder um Beschädigungen an dem Kopf oder durch den Kopf zu vermeiden.

Insbesondere kann das Sperrorgan durch eine Drehung von der Einsteck- in die Betriebsstellung gebracht werden. Alternativ kann das Sperrorgan jeweils in der Einsteck- und/oder der Betriebsstellung drehbar sein, aber nicht durch eine Drehung von der Einsteck- in die Betriebsstellung gebracht werden. Das Sperrorgan kann nur um einen bestimmten Winkel oder um eine ganze oder um mehrere Umdrehungen drehbar sein. Um einen Verlust des Sperrorgans zu vermeiden, kann es unverlierbar am Kettenschloss gehalten sein, wobei in einer platzsparenden Ausgestaltung das Sperrorgan durch Formschlussverbindung unverlierbar im Kettenschloss gehalten ist.

Die Drehrastung kann dabei das Sperrorgan verrasten, so dass es nur durch Aufwendung einer ausreichend hohen Kraft aus der Betriebsstellung herausbewegt werden kann, oder verriegeln, so dass es auch bei Aufwendung einer Kraft nicht ohne zusätzliche, entriegelnde Aktionen aus der Betriebsstellung herausbewegt werden kann.

Die Drehrastung kann einen sich quer zur Längsachse in eine Ausnehmung des Sperrorgans erstreckenden Stift aufweisen. Der Stift kann das Sperrorgan in der Drehstellung blockieren, insbesondere verriegeln. Der Stift kann beweglich, insbesondere verschieblich gelagert sein, so dass er in einer Position sich in die Ausnehmung des Sperrorgans erstreckt und sich in einer anderen Position nicht in die Ausnehmung des Sperrorgans erstreckt.

Der Stift kann gegen Federkraft auslenkbar sein. Er kann durch ein Federelement, beispielsweise eine Spiral- oder Schraubenfeder oder ein gummielastisches Element in eine Richtung vorgespannt sein. Beispielsweise kann der Stift so vorgespannt sein, dass er sich automatisch in eine die Drehstellung blockierende Position oder in eine einen Formschluss erzeugende Position bewegt. Dadurch kann etwa eine automatische Verrastung oder Sicherung gewährleistet sein. Aus der Rastposition oder der Sicherungsposition kann der Stift beispielsweise manuell ausgelenkt werden.

Um ein Herausfallen oder Herauslösen des Stiftes zu verhindern, kann der Stift durch einen Sicherungsstift im Kettenschloss verschieblich gesichert sein. Der Sicherungsstift ermöglicht hier also eine Verschiebung des Stiftes, blockiert seine Bewegung jedoch an einem Ende oder an zwei Enden.

Der Stift kann eine Ausnehmung aufweisen, in die das Sperrorgan wenigstens in der Einsteckstellung ragt. Durch einen so ausgestalteten Stift wird Platz eingespart. Ein entsprechendes Kettenschloss kann kompakter sein.

In einer vorteilhaften Ausgestaltung bildet die Formschlussverbindung eine Drehrastung. Die Formschlussverbindung erfüllt hier eine Doppelfunktion, wodurch Platz eingespart wird. Ferner weist ein solches Kettenschloss weniger Elemente auf, wodurch eine Fertigung vereinfacht sein kann und das Kettenschloss weniger Wartung benötigt. Auch eine Bedienung des Kettenschlosses kann durch die Zusammenlegung zweier Funktionen in einem Element erleichtert sein.

Die Drehrastung kann von der Einsteck- in die Betriebsstellung und zurück überführbar sein. Dabei kann sie in der Einsteck- und/oder in der Betriebsstellung verrasten. Die Drehrastung kann beispielsweise durch Aufbringen einer Kraft oder manuelles Lösen der Verrastung aus der Verrastung herausbewegt werden.

Die Drehrastung kann in der Betriebsstellung verriegelt sein. Das Sperrorgan kann nicht aus der Betriebsstellung herausgebracht werden, zumindest nicht ohne weitere, die Verriegelung lösende Aktionen auszuführen, beispielsweise ein manuelles Auslenken eines Elements. Die Drehrastung kann von der Einsteck- in die Betriebsstellung überführbar sein und dann in der Betriebsstellung verriegelt sein. Die Verriegelung kann automatisch durch die Überführung von der Einsteck- in die Betriebsstellung erfolgen, beispielsweise durch einen Rast- oder Schnappmechanismus.

In einer vorteilhaften Ausgestaltung kann der Stift die Drehrastung bilden. Gleichzeitig kann er als Formschlussverbindung fungieren. Eine solche Ausgestaltung kann besonders kompakt sein.

Das Sperrorgan kann in einem verdickten Bereich eines Längsschenkels gelagert sein. Ein solcher Längsschenkel erstreckt sich zwischen zwei Bugen des Grundkörpers. Um eine ausreichende Stabilität zu gewährleisten, kann der Längsschenkel nach ein oder zwei Richtungen hin verdickt sein.

Das Sperrorgan kann im Wesentlichen bolzenförmig und/oder stiftförmig sein. Ein so ausgestaltetes Sperrorgan kann sich besonders leicht fertigen und/oder bewegen lassen. Insbesondere kann es sich besonders einfach drehen lassen.

Im Folgenden wird die Erfindung anhand vorteilhafter Ausgestaltungen mit Bezug auf die Zeichnungen beispielhaft näher erläutert. Die bei den einzelnen Ausführungsbeispielen unterschiedlichen Merkmale können nach Maßgabe der obigen Ausführungen miteinander kombiniert werde. Außerdem können nach Maßgabe der obigen Darstellungen auch einzelne Merkmale bei den Ausführungsbeispielen weggelassen werden, sollte es im speziellen Anwendungsfall auf den mit diesem Merkmal verbundenen Vorteil nicht ankommen.

Es zeigen:
- Fig. 1: einen schematischen Längsschnitt durch eine erste Ausführungsform eines Kettenschlosses;
- Fig. 2: verschiedene Ansichten eines zu der ersten Ausführungsform aus Fig. 1 gehörenden Sperrorgans;
- Fig. 3: eine schematische Perspektivansicht des Sperrorgans aus Fig. 2;
- Fig. 4: eine schematische Draufsicht auf die erste Ausführungsform eines Kettenschlosses aus Fig. 1;
- Fig. 5: eine schematische Längsschnittansicht einer zweiten Ausführungsform eines Kettenschlosses;
- Fig. 6: zwei verschiedene Ansichten eines zur zweiten Ausführungsform aus Fig. 5 gehörenden Sperrorgans;
- Fig. 7: eine schematische Längsschnittansicht einer dritten Ausführungsform eines Kettenschlosses;
- Fig. 8: eine schematische Schnittansicht des zur dritten Ausführungsform aus Fig. 7 gehörenden Sperrorgans; und
- Fig. 9: einen alternativen Querschnitt eines zur dritten Ausführungsform gehörenden Sperrorgans im Bereich unter dem Kopf.

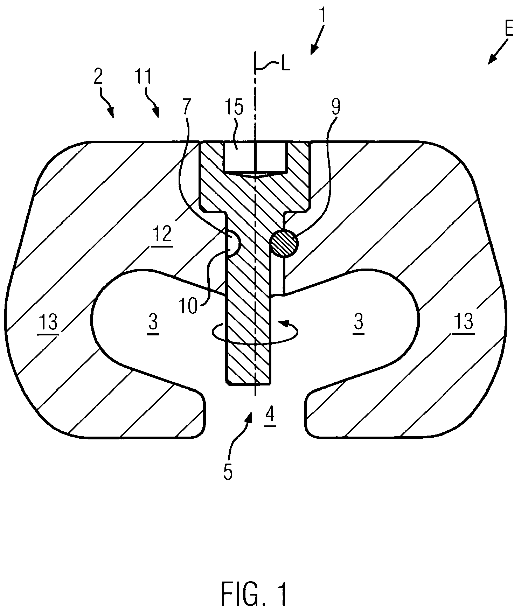

In Fig. 1 ist eine erste Ausführungsform eines Kettenschlosses 1 in einem Längsschnitt dargestellt. Das Kettenschloss 1 dient zur Verbindung zweier Kettenglieder (nicht gezeigt). Dazu verfügt es über einen Grundkörper 2, der zwei Aufnahmen 3 für jeweils eines der beiden Kettenglieder und eine den beiden Aufnahmen 3 gemeinsame Einführöffnung 4 zum Einhängen der Kettenglieder bildet. Das Kettenschloss 1 verfügt ferner über ein Sperrorgan 5. Das Sperrorgan 5 ist hier in einer Einsteckstellung E gezeigt, in der es durch den Grundkörper 2 durchgesteckt werden kann. In der Einsteckstellung E kann es ferner aus dem Grundkörper 2 wieder herausgenommen werden. Von der gezeigten Einsteckstellung E kann durch Rotation des Sperrorgans 5 um seine Längsachse L in eine Betriebsstellung B gewechselt werden, in der das Sperrorgan 5 durch eine Formschlussverbindung 6 im Grundkörper 2 gehalten ist. Die Rotation ist dabei durch einen Pfeil angedeutet. Diese Darstellung der Rotation ist zum einfacheren Verständnis nicht ganz korrekt. Das Sperrorgan 5 rotiert um die Längsachse L, die in der Zeichenebene liegt.

Der Formschluss zwischen dem Grundkörper 2 und dem Sperrorgan 5 wird durch eine Nut 7 am Sperrorgan 5, die einen Halsabschnitt 8 bildet, zusammen mit einem in den Grundkörper 2 eingesetzten Stift 9 erzeugt. Der Stift 9 erstreckt sich in eine Ausnehmung 10 des Sperrorgans 5 und verläuft quer zur Längsachse L. In dem hier gezeigten Beispiel ist der Stift 9 unbeweglich in dem Grundkörper 2 angeordnet.

Das Sperrorgan 5 wird von einer der Einführöffnung 4 abgewandten Rückseite 11 des Kettenschlosses 1 her zwischen die beiden Aufnahmen 3 ragend durchgesteckt, nachdem die Kettenglieder in die Aufnahmen 3 eingeführt wurden. In diesem durchgesteckten Zustand blockiert das Sperrorgan 5 die Einführöffnung 4, so dass die Kettenglieder nicht aus den Aufnahmen 3 und damit aus dem Kettenschloss 1 herausfallen können. Um das Sperrorgan 5 im Grundkörper 2 zu halten, ist dieses über eine Formschlussverbindung 6 zumindest in der Betriebsstellung B (nicht gezeigt) in diesem unverlierbar gehalten.

Das Sperrorgan 5 ist bei dieser Ausführungsform sowohl in der Einsteckstellung E wie auch in der Betriebsstellung B drehbar. Durch eine Drehung kann das Sperrorgan 5 von der Einsteckstellung E in die Betriebsstellung B und zurück überführt werden.

Das Sperrorgan 5 ist in einem Längsschenkel 12 des Kettenschlosses 1 angeordnet, der zwei Buge 13 miteinander verbindet. Um eine ausreichende Stabilität zu gewährleisten, ist der Längsschenkel 12 dabei entlang der Längsachse L und quer dazu aus der Zeichenebene heraus und in die Zeichenebene hinein verdickt.

Das Sperrorgan 5 ist im Wesentlichen bolzen- oder stiftförmig. Es verfügt über einen Kopf 14, an dem es betätigt, d. h. gedreht werden kann. Dazu verfügt das Sperrorgan 5 über eine Werkzeugschnittstelle 15, die hier als Aufnahme für einen Sechskantschlüssel ausgestaltet ist.

Der Kopf 14 des Sperrorgans 5 ist im Längsschenkel 12 und damit im Grundkörper 2 des Kettenschlosses 1 versenkt. Dadurch ist ein unbeabsichtigtes Betätigen des Sperrorgans 5 verhindert. Ferner kann das Sperrorgan 5 auch keine anderen Elemente beschädigen.

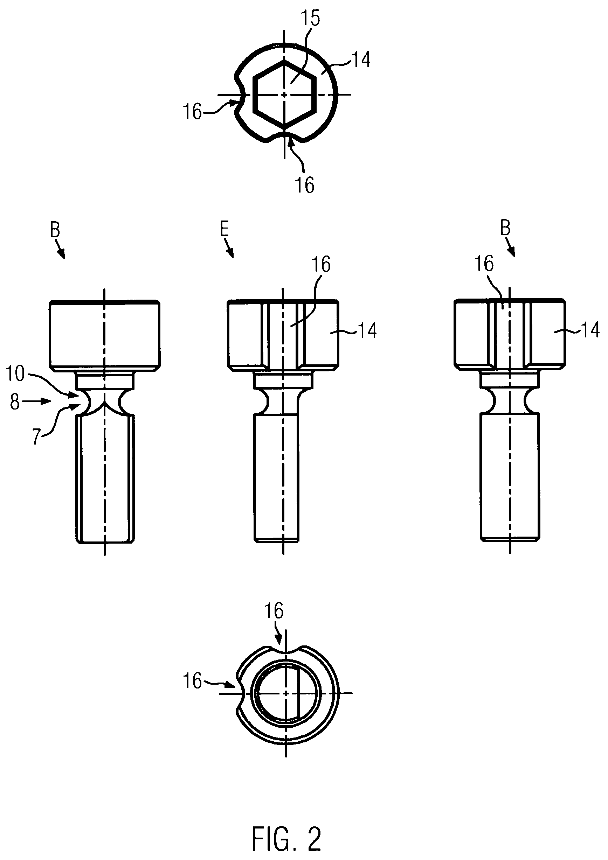

In Fig. 2 sind verschiedene Ansichten des Sperrorgans 5 aus Fig. 1 dargestellt. Oben beziehungsweise unten sind eine Ansicht von oben beziehungsweise von unten zu sehen. In der Mitte sind drei jeweils um 90° gedrehte Seitenansichten gezeigt. Die verschiedenen Seitenansichten können auch als verschiedenen Drehstellungen interpretiert werden. Liegt das Kettenschloss 1 so wie in Fig. 1 dargestellt, so entspricht die mittlere Seitenansicht der schon in Fig. 1 dargestellten Einsteckstellung E. Die links und rechts dargestellten Seitenansichten entsprechen dann einer Betriebsstellung B, in der das Sperrorgan 5 nicht aus dem Grundkörper 2 entnommen oder in diesen eingesteckt werden kann.

Zu erkennen sind auch Ausnehmungen 16, die zu einer Drehrastung 17 gehören, mit der das Sperrorgan 5 relativ zum Grundkörper 2 in einer Drehstellung blockierend verrastet werden kann.

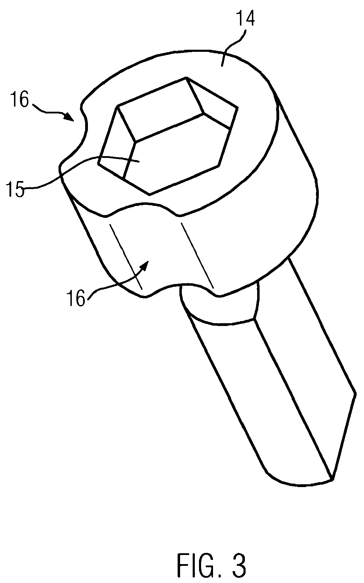

In Fig. 3 ist das Sperrorgan 5 aus Fig. 2 perspektivisch dargestellt.

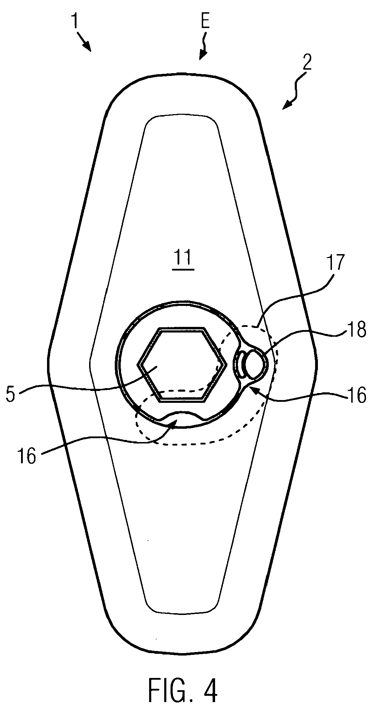

In Fig. 4 ist das Sperrorgan 5 in den Grundkörper 2 eingesetzt dargestellt. Zu erkennen ist die Drehrastung 17, die aus den Ausnehmungen 16 am Kopf 14 und einem gummielastischen Element 18, das in den Grundkörper 2 eingesetzt ist, besteht. Die Drehrastung 17 verrastet das Sperrorgan 5 relativ zum Grundkörper 2. Dabei kann das Sperrorgan 5 durch Aufbringen einer Kraft einen durch die Drehrastung 17 verursachten Widerstand überwinden und von einer Betriebsstellung B in eine Einsteckstellung E und zurück überführt werden.

In der ersten Ausführungsform sind die Formschlussverbindung 6 und die Drehrastung 17 also baulich voneinander getrennt.

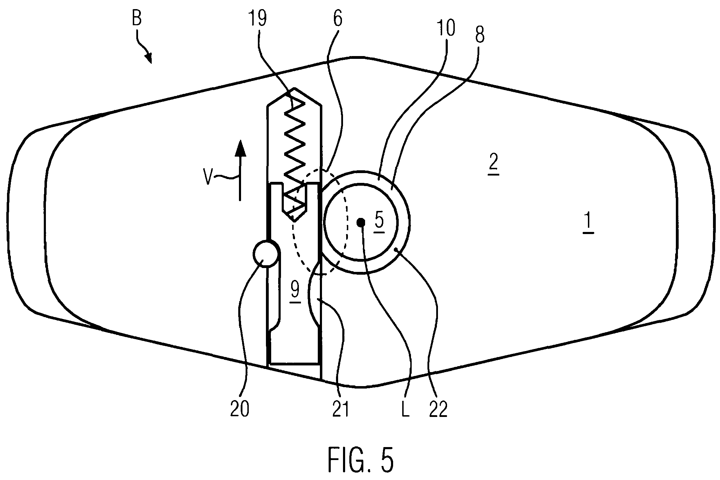

In Fig. 5 ist eine zweite Ausführungsform eines Kettenschlosses 1 in einer Schnittdarstellung gezeigt. Der Schnitt verläuft in dem Bereich, in dem ein Formschluss zwischen dem Sperrorgan 5 und dem Grundkörper 2 erfolgt. Die Formschlussverbindung 6 umfasst hier Teile des Grundkörpers 2, des Sperrorgans 5 und eines Stiftes 9, der sich quer zur Längsachse L in eine Ausnehmung 10 des Sperrorgans 5 erstreckt. Der Stift 9 ist gegen die Federkraft eines Federelementes 19 auslenkbar. Das Federelement 19 versucht, den Stift 9 in eine Betriebsstellung B zu drücken, in der ein Formschluss zwischen dem Sperrorgan 5 und dem Grundkörper 2 vorhanden ist. Der Stift 9 ist durch einen Sicherungsstift 20 im Kettenschloss 1 gehalten, wobei der Sicherungsstift 20 eine Verschiebung des Stiftes 9 innerhalb eines bestimmten Bewegungsspielraums erlaubt. Auf der dem Sperrorgan 5 zugewandten Seite weist der Stift 9 eines Ausnehmung 21 auf, in die das Sperrorgan 5 wenigstens in der Einsteckstellung E ragt. Um das Sperrorgan 5 in den Grundkörper 2 einzuführen, wird der Stift 9 in einer Verschieberichtung V im Grundkörper 2 verschoben, so dass die Ausnehmung 21 in der Mitte des Grundkörper 2 liegt. Dann kann das Sperrorgan 5 senkrecht zur Zeichenebene und entlang der Längsachse L in den Grundkörper 2 hineingesteckt oder aus dem Grundkörper 2 herausgenommen werden. Sobald das Sperrorgan 5 in die Ausnehmung 21 ragt, muss der Stift 9 nicht mehr aktiv ausgelenkt werden. Ist das Sperrorgan 5 noch nicht vollständig eingeführt, so überlappt ein unterer Bereich 22 mit der Ausnehmung 21 und der Stift 9 kann sich noch nicht zurückbewegen. Wird das Sperrorgan 5 weiter eingeführt, so schnappt der Stift 9 automatisch entgegen der Verschieberichtung V zurück, sobald die Nut 7, die den Halsabschnitt 8 bildet, in den Bereich des Stiftes 9 und damit der Ausnehmung 21 kommt. Das Kettenschloss 1 geht also automatisch von der Einsteckstellung E in die Betriebsstellung B über, sobald das Sperrorgan 5 vollständig eingeführt ist.

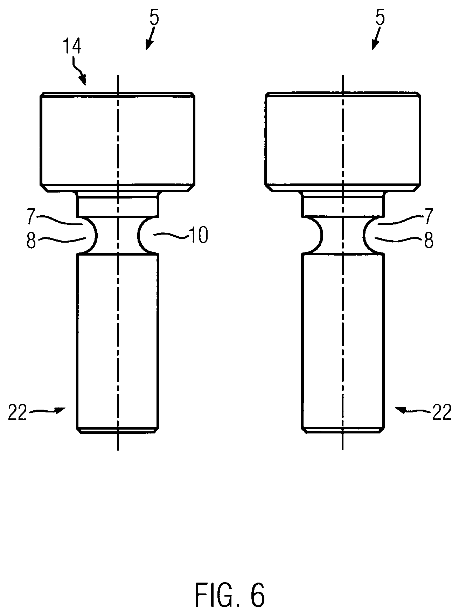

In Fig. 6 sind zwei Seitenansichten des Sperrorgans 5 aus Fig. 5 gezeigt. Im Gegensatz zu der Ausgestaltung des Sperrorgans 5 aus Fig. 2 verfügt dieses Sperrorgan 5 im unteren Bereich 22 über eine kreiszylindrische Ausgestaltung. Sobald das Sperrorgan 5 in der Betriebsstellung B ist, führt der Formschluss zwischen der umlaufenden Nut 7 und dem Stift 9 zu einem Formschluss, der nur durch eine Auslenkung des Stiftes 9 wieder gelöst werden kann. Das Sperrorgan 5 kann nicht durch Rotation von der Einsteckstellung E in die Betriebsstellung B oder von der Betriebsstellung B in die Einsteckstellung E gebracht werden. Deshalb verfügt es im Bereich des Kopfes 14 auch nicht über eine Werkzeugschnittstelle 15. Das Sperrorgan 5 ist in der Betriebsstellung B und in der Einsteckstellung E jeweils drehbar.

In einer alternativen Ausgestaltung der zweiten Ausführungsform könnte auch das Sperrorgan 5 aus der Fig. 2 in den Grundkörper 2 aus Fig. 5 eingeführt werden. Bei einer solchen Kombination könnte das Sperrorgan 5 zum einen eingesteckt werden oder entnommen werden, wenn es sich in der richtigen Rotationsstellung relativ zum Grundkörper 2 befindet, wie dies schon in Fig. 1 gezeigt ist. Zum anderen könnte das Sperrorgan 5 auch durch Auslenken des Stiftes 9 eingesteckt oder entnommen werden.

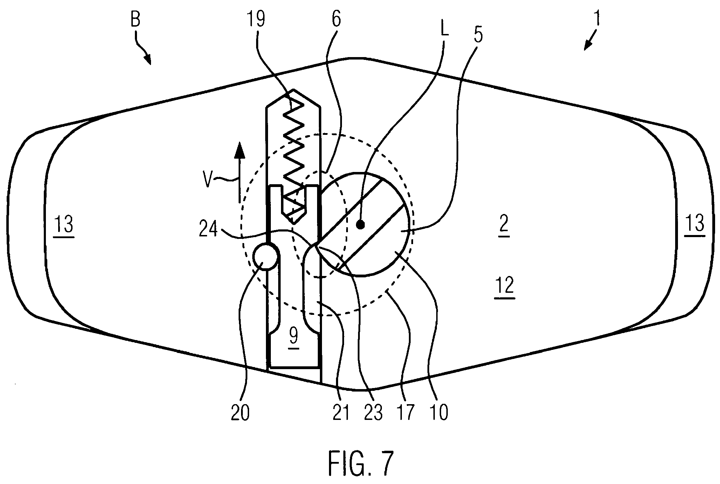

In Fig. 7 ist eine dritte Ausführungsform eines Kettenschlosses 1 in einer Schnittdarstellung gezeigt. Der Schnitt erfolgt wieder in einer Ebene, in der der Formschluss zwischen dem Sperrorgan 5 und dem Grundkörper 2 über einen beweglichen Stift 9 erfolgt. Die Formschlussverbindung 6 umfasst wieder Teile des Stiftes 9, Teile des Sperrorgans 5 und Teile des Grundkörpers 2. Wie in der zweiten Ausführungsform ist der Stift 9 hier auch durch ein Federelement 19 in Richtung der Betriebsstellung B vorgespannt, so dass dieser automatisch in die Betriebsstellung B übergeht, wenn dies möglich ist. Die Bewegung des Stiftes 9 wird wieder durch einen Sicherungsstift 20 begrenzt.

Im Gegensatz zur zweiten Ausführungsform kann die dritte Ausführungsform durch Rotation des Sperrorgans 5 von der Betriebsstellung B in die Einsteckstellung E und zurück überführt werden. Der Stift 9 bildet dabei einen Teil einer Drehrastung 17, die das Sperrorgan 5 in der Betriebsstellung B verrastet. Um das Sperrorgan 5 aus der Betriebsstellung B heraus in die Einsteckstellung E zu bringen, muss Kraft aufgewandt werden und die Federkraft des Federelementes 19 überwunden werden. Ein selbsttätiges Herausbewegen aus der Betriebsstellung B ist dadurch weitgehend verhindert. Um das Sperrorgan 5 aus der Betriebsstellung B herauszubewegen, wird es um die Längsachse L gedreht, wodurch eine Anschlagfläche 23 an eine Gegenanschlagfläche 24 am Stift 9 angreift und diesen in der Verschieberichtung V auslenkt. Bei genügend großer Auslenkung besteht kein Formschluss zwischen dem Sperrorgan 5 und dem Stift 9 in der Richtung der Längsachse L, da das Sperrorgan 5 in eine Ausnehmung 21 des Stiftes 9 eingreift. Bei einer weiteren Rotation des Sperrorgans 5 schnappt der Stift 9 jedoch automatisch in eine Ausnehmung 10 des Sperrorgans 5 zurück, wenn das Sperrorgan 5 nicht herausgezogen wird.

Die Drehrastung 17 der dritten Ausführungsform bildet gleichzeitig eine Formschlussverbindung 6, wodurch eine kompakte Ausgestaltung möglich ist. Beide Funktionen sind in dem Stift 9 vereint.

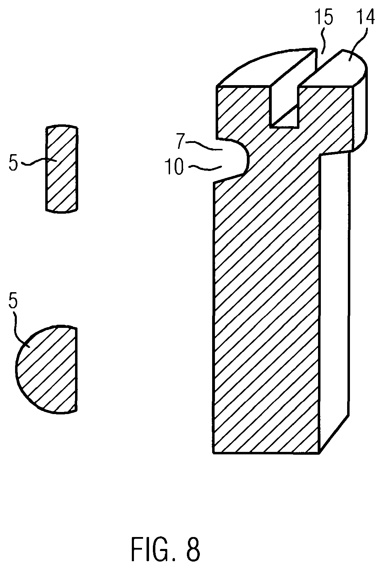

In Fig. 8 ist eine Ausgestaltung eines Sperrorgans 5 der dritten Ausführungsform gezeigt. Auf der rechten Seite ist eine Längsschnittdarstellung gezeigt, links sind Querschnitte durch das Sperrorgan 5 gezeigt, die jeweils auf der entsprechenden Höhe gemacht wurden. Im Bereich der Nut 7 wird ein Formschluss zwischen dem Sperrorgan 5 und dem Grundkörper 2 erzeugt.

Der Kopf 14 des Sperrorgans 5 weist wieder eine Werkzeugschnittstelle 15 auf, die hier als Schlitz für einen Schraubendreher ausgestaltet ist.

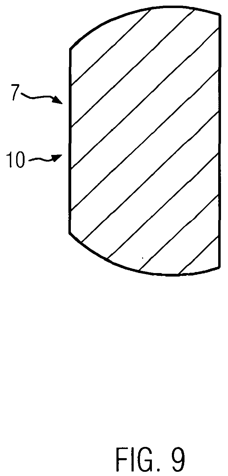

In Fig. 9 ist eine alternative Ausgestaltung des Querschnitts des Sperrorgans 5 im Bereich der Ausnehmung 10 gezeigt. Im Gegensatz zu der rotationssymmetrischen Ausgestaltung des in Fig. 8 gezeigten Sperrorgans 5 kann in diesem Bereich auch ein Querschnitt vorhanden sein, bei dem die Ausnehmung 10 kleiner ist. Bei einer solchen Ausgestaltung ist der Bereich, in dem sich das Sperrorgan 5 bewegen kann, wenn es verrastet ist, kleiner.

Die Sperrorgane aus den verschiedenen Ausführungsformen können zum Teil auch mit den Grundkörpern 2 der anderen Ausführungsformen kombiniert werden. Beispielsweise kann ein Sperrorgan 5, wie es bei der ersten Ausführungsform gezeigt ist, auch zusammen mit den Elementen der dritten Ausführungsform benutzt werden.

### Bezugszeichen

- 1: Kettenschloss
- 2: Grundkörper
- 3: Aufnahme
- 4: Einführöffnung
- 5: Sperrorgan
- 6: Formschlussverbindung
- 7: Nut
- 8: Halsabschnitt
- 9: Stift
- 10: Ausnehmung des Sperrorgans
- 11: Rückseite
- 12: Längsschenkel
- 13: Bug
- 14: Kopf
- 15: Werkzeugschnittstelle
- 16: Ausnehmung für Drehrastung
- 17: Drehrastung
- 18: gummielastisches Element
- 19: Federelement
- 20: Sicherungsstift
- 21: Ausnehmung des Stifts
- 22: unterer Bereich
- 23: Anschlagfläche
- 24: Gegenanschlagfläche
- E: Einsteckstellung
- B: Betriebsstellung
- L: Längsachse

## Patentansprüche

1. Kettenschloss (1) zur Verbindung zweier Kettenglieder mit einem Grundkörper (2), der zwei Aufnahmen (3) für jeweils eines der beiden Kettenglieder und eine den beiden Aufnahmen (3) gemeinsame Einführöffnung (4) zum Einhängen der Kettenglieder bildet, und mit einem in einer Einsteckstellung (E) durch den Grundkörper (2) durchsteckbaren und in einer Betriebsstellung (B) die Einführöffnung (4) versperrenden Sperrorgan (5), wobei das Sperrorgan (5) in der Betriebsstellung (B) durch eine Formschlussverbindung (6) im Grundkörper (2) gehalten ist, wobei das Sperrorgan (5) in der Einsteckstellung (E) und/oder in der Betriebsstellung (B) drehbar und in seiner Längsrichtung durch die Formschlussverbindung (6) unverlierbar im Kettenschloss (1) gehalten ist, **dadurch gekennzeichnet, dass** das Sperrorgan (5) in der Betriebsstellung (B) durch eine die Drehstellung blockierende Drehrastung (17) gehalten ist.

2. Kettenschloss (1) nach Anspruch 1, wobei das Sperrorgan (5) von einer der Einführöffnung (4) abgewandten Rückseite (11) des Kettenschlosses (1) her zwischen die beiden Aufnahmen (3) ragend durchgesteckt ist.

3. Kettenschloss (1) nach einem der Ansprüche 1 oder 2, wobei die Drehrastung (17) einen sich quer zur Längsachse (L) in eine Ausnehmung (10) des Sperrorgans (5) erstreckenden Stift (9) aufweist.

4. Kettenschloss (1) nach Anspruch 3, wobei der Stift (9) gegen Federkraft auslenkbar ist.

5. Kettenschloss (1) nach Anspruch 3 oder 4, wobei der Stift (9) durch einen Sicherungsstift (20) im Kettenschloss (1) verschieblich gesichert ist.

6. Kettenschloss (1) nach einem der Ansprüche 3 bis 5, wobei der Stift (9) eine Ausnehmung (21) aufweist, in die das Sperrorgan (5) wenigstens in Einsteckstellung (E) ragt.

7. Kettenschloss (1) nach einem der Ansprüche 1 bis 6, wobei die Formschlussverbindung (6) eine Drehrastung (17) bildet.

8. Kettenschloss (1) nach Anspruch 7, wobei die Drehrastung (17) von der Einsteckstellung (E) in die Betriebsstellung (B) und zurück überführbar ist.

9. Kettenschloss (1) nach Anspruch 7, wobei die Drehrastung (17) in der Betriebsstellung (B) verriegelt ist.

10. Kettenschloss (1) nach einem der Ansprüche 3 bis 9, wobei der Stift (9) einen Teil der Drehrastung (17) bildet.

11. Kettenschloss (1) nach einem der Ansprüche 1 bis 10, wobei die Formschlussverbindung (6) einen sich quer zur Längsachse (L) in eine Ausnehmung (10) des Sperrorgans (5) erstreckenden Stift (9) aufweist, wobei der Stift (9) eine Ausnehmung (21) aufweist, in dem das Sperrorgan (5) wenigstens in der Einsteckstellung (E) ragt.

12. Kettenschloss (1) nach Anspruch 11, wobei der Stift (9) gegen Federkraft auslenkbar ist.

13. Kettenschloss (1) nach einem der Ansprüche 11 oder 12, wobei der Stift (9) durch einen Sicherungsstift (20) im Kettenschloss (1) verschieblich gesichert ist.

## Claims

1. A chain lock (1) for connecting two chain links, comprising a body member (2), which defines two accommodation means (3), each for a respective one of the two chain links, and an insertion opening (4) common to both accommodation means (3) and used for hooking in the chain links, and further comprising a locking element (5), which is adapted to be passed through the body member (2) in an insertion position (E) and which blocks the insertion opening (4) in an operating position (B), wherein the locking element (5) is retained in the body member (2) by a form-fit connection (6) in the operating position (B), wherein the locking element (5) is rotatable and is captively secured in the chain lock (1) by the form-fit connection (6) in the longitudinal direction thereof in the insertion position (E) and/or in the operating position (B), **characterized in that**, in the operating position (B), the locking element (5) is retained by a rotation lock (17) blocking the rotational position.

2. The chain lock (1) according to claim 1, wherein the locking element (5) is passed through from a back (11) of the chain lock (1) facing away from the insertion opening (4), such that it extends between the two accommodation means (3).

3. The chain lock (1) according to one of the claims 1 or 2, wherein the rotation lock (17) comprises a pin (9) extending transversely to the longitudinal axis (L) into a recess (10) of the locking element (5).

4. The chain lock (1) according to claim 3, wherein the pin (9) can be deflected against a spring force.

5. The chain lock (1) according to claim 3 or 4, wherein the pin (9) is displaceably secured in the chain lock (1) by means of a locking pin (20).

6. The chain lock (1) according to one of the claims 3 to 5, wherein the pin (9) is provided with a recess (21) into which the locking element (5) projects, at least in the insertion position (E).

7. The chain lock (1) according to one of the claims 1 to 6, wherein the form-fit connection (6) defines a rotation lock (17).

8. The chain lock (1) according to claim 7, wherein the rotation lock (17) is adapted to be transferred from the insertion position (E) to the operating position (B) and back into the insertion position (E).

9. The chain lock (1) according to claim 7, wherein the rotation lock (17) is locked in the operating position (B).

10. The chain lock (1) according to one of the claims 3 to 9, wherein the pin (9) defines a part of the rotation lock (17).

11. The chain lock (1) according to one of the claims 1 to 10, wherein the form-fit connection (6) comprises a pin (9) extending transversely to the longitudinal axis (L) into a recess (10) of the locking element (5), wherein the pin (9) is provided with a recess (21) into which the locking element (5) projects, at least in the insertion position (E).

12. The chain lock (1) according to claim 11, wherein the pin (9) can be deflected against a spring force.

13. The chain lock (1) according to one of the claims 11 or 12, wherein the pin (9) is displaceably secured in the chain lock (1) by means of a locking pin (20).

## Revendications

1. Joint de liaison de chaine (1) destiné à relier deux maillons de chaine, comprenant un corps de base (2), qui forme deux logements d'accueil (3) dont chacun est destiné à l'un des deux maillons de chaine et une ouverture d'insertion (4) commune aux deux logements d'accueil (3) pour l'accrochage des maillons de chaine, et comprenant un organe de verrouillage (5), qui, dans une position d'enfichage (E), peut être enfiché à travers le corps de base (2) et, dans une position de service (B), verrouille l'ouverture d'insertion (4), joint de liaison de chaine
dans lequel l'organe de verrouillage (5) est maintenu, dans la position de service (B), par une liaison par complémentarité de formes (6) dans le corps de base (2), et
dans lequel l'organe de verrouillage (5), dans la position d'enfichage (E) et/ou dans la position de service (B), est maintenu rotatif et imperdable dans sa direction longitudinale dans le joint de liaison de chaine (1) par l'intermédiaire de la liaison par complémentarité de formes (6),
**caractérisé en ce que** l'organe de verrouillage (5) est maintenu dans la position de service (B) par un encliquetage de rotation (17) bloquant la position de rotation.

2. Joint de liaison de chaine (1) selon la revendication 1, dans lequel l'organe de verrouillage (5) est enfiché à partir d'un côté arrière (11) du joint de liaison de chaine (1), opposé au côté de l'ouverture d'insertion (4), et fait saillie entre les deux logements d'accueil (3).

3. Joint de liaison de chaine (1) selon l'une des revendications 1 ou 2, dans lequel l'encliquetage de rotation (17) comprend une broche ou goupille (9) s'étendant transversalement à l'axe longitudinal (L) dans un évidement (10) de l'organe de verrouillage (5).

4. Joint de liaison de chaine (1) selon la revendication 3, dans lequel la broche (9) peut être déplacée à l'encontre d'une force de ressort.

5. Joint de liaison de chaine (1) selon la revendication 3 ou la revendication 4, dans lequel la broche (9) est arrêtée de manière coulissante dans le joint de chaine (1) par une broche d'arrêt (20).

6. Joint de liaison de chaine (1) selon l'une des revendications 3 à 5, dans lequel la broche (9) présente un évidement (21) où s'engage l'organe de verrouillage (5) au moins dans la position d'enfichage (E).

7. Joint de liaison de chaine (1) selon l'une des revendications 1 à 6, dans lequel la liaison par complémentarité de formes (6) forme un encliquetage de rotation (17).

8. Joint de liaison de chaine (1) selon la revendication 7, dans lequel l'encliquetage de rotation (17) peut être transféré de la position d'enfichage (E) à la position de service (B) et inversement en retour.

9. Joint de liaison de chaine (1) selon la revendication 7, dans lequel l'encliquetage de rotation (17) est verrouillé dans la position de service (B).

10. Joint de liaison de chaine (1) selon l'une des revendications 3 à 9, dans lequel la broche (9) forme une partie de l'encliquetage de rotation (17).

11. Joint de liaison de chaine (1) selon l'une des revendications 1 à 10, dans lequel la liaison par complémentarité de formes (6) comprend une broche ou goupille (9) s'étendant transversalement à l'axe longitudinal (L) dans un évidement (10) de l'organe de verrouillage (5), la broche (9) présentant un évidement (21) où s'engage l'organe de verrouillage (5) au moins dans la position d'enfichage (E).

12. Joint de liaison de chaine (1) selon la revendication 11, dans lequel la broche (9) peut être déplacée à l'encontre d'une force de ressort.

13. Joint de liaison de chaine (1) selon l'une des revendications 11 ou 12, dans lequel la broche (9) est arrêtée de manière coulissante dans le joint de chaine (1) par une broche d'arrêt (20).
